# EUROPEAN PATENT APPLICATION

(11) **EP 3 396 608 A1**
(43) Date of publication of application: **31.10.2018**
(21) Application number: 17167822.0
(22) Date of filing: 24.04.2017
(51) Int. Cl.: G06Q 20/02, G06Q 20/06

(54) **METHOD AND SYSTEM FOR SETTLING A BLOCKCHAIN TRANSACTION**

(71) Applicant: BlockSettle AB, 216 19 Malmö (SE)
(72) Inventor: Millar, Scott, 216 19 MALMÖ (SE); Janson, Albert, 239 40 FALSTERBO (SE); Fathpour Pakzad, Farhod, 95540 MERY SUR OISE (FR)
(74) Representative: Noréns Patentbyrå AB

(57) **Abstract**

Method for settling a transaction concerning an asset and being registered by forming part of a blockchain-based ledger (L) for said asset, which ledger (L) is arranged to keep track of transactions concerning the asset in question from senders to specified asset addresses (A), which transactions are signed using a private cryptographic key belonging to the sender in question.

The method is characterised in that the method comprises the steps
a central server identifying a seller (200), being associated with a seller address, and a buyer (300), being associated with a buyer address, of the said asset, at a specified price, and the central server producing a transaction identifier;
calculating, based upon the seller address or corresponding public key, the buyer address or corresponding public key, and the transaction identifier, a M-of-N multi-signature ad-dress capable of being activated by a respective private key of both the seller (200) and the buyer (300), which respective private key corresponds to said respective public key, wherein M<N;
the seller (200) signing a first transaction of the asset to the multi-signature ad-dress;
the buyer (300) signing a second transaction of the asset from the multi-signature address to the buyer address;
the central server verifying the first and second transactions; and
the central server settling the said price between the buyer and seller.

The invention also relates to a system and to a computer product.

## Description

The present invention relates to methods and systems relating to blockchain-based transactions. In particular, the methods and systems disclosed herein relate to the creating of a user identity to be used in such transactions, and to the settlement of such transactions.

Blockchain-based assets are becoming increasingly important as carriers of value in different aspects. One well-known example is the bitcoin currency, but there are also many other assets in circulation. Common for such blockchain-based assets is that transactions of the assets in question are recorded in blockchain-based ledgers.

In a blockchain-based ledger, the entire historical record of transactions, or references to the historical transactions, is typically stored in a way in which each transaction is linked, directly or indirectly, to previous transactions using one-way functions. As a result of this structure, a historical transaction recorded on the ledger is very difficult to modify in retrospect, since this requires the modifying party to change each intermediate state of the ledger between the changed transaction and the current state of the ledger in a way which does not rise suspicion from other peers to the blockchain-based ledger. Since the ledger may normally be distributed across many different such peers, such changing is typically in practise impossible.

The "block" in a blockchain-based ledger refers to combinations of several transactions, that are added to the blockchain as individually sealed packages. This provides simplicity and increased security across a network of peers that do not necessarily trust one another. The process of creating sealed and verified blocks is sometimes called "mining" of the block-chain. Once a block is created and sealed, using a one-way function, all transactions contained in the block in question are verifiable by all peers having access to the ledger.

Blockchain-based ledgers are as such well-known in the art, and will not be discussed in detail herein. As an example, transactions in the bitcoin currency are recorded in a block-chain-based ledger, the bitcoin blockchain.

For blockchain-based assets, there are a number of trust-based problems when performing transactions between such assets.

Since a sending or a receiving address may often be identified only based upon a unique number, such as a hash value, it is often not possible for a counterparty to know, with certainty, who actually controls the address in question. In many applications, this may even be desirable. At any rate, it is in general a problem to be able to perform transactions with a non-trusted counterparty. A payment of an amount of a blockchain-based currency, such as bitcoin, to a compromised receiver address may furthermore lead to the irrevocable loss of the paid amount.

Furthermore, when trading assets that are registered in different locations, such as on different ledgers, there is a problem regarding ledger synchronization, trust and timing. This is in particular the case for trades involving cash for bitcoin (or other blockchain-based assets).

To solve these problems it has been proposed to use a central custodian functionality, and to let participants prefund blockchain-based asset balances ahead of being provided with access to trading. This leads to both capital and market inefficiencies, such as poor timing performance.

Furthermore, allocating the traded asset with such an intermediary third party only transfers the trust problem from the counterparty to the third party in question.

As a result of the mining process, it may sometimes take some time for a sufficient depth of sealed blocks to be created before the parties to a transaction can count on the validity of the transaction. This results in insecurity during this wait. For an asset such as bitcoin, the mining to sufficient depth can take about an hour, which poses an additional trust problem for the parties. To avoid such delays, it is, again, possible to use a central custodian keeping pre-deposited balances, resulting in the above described problems.

The prior art includes US 20160330034 A1 and WO 2016141361 A1, describing relevant background art relating to blockchain-based assets and blockchain side-chaining.

The present invention solves these problems, and in particular for transactions involving blockchain-based assets being exchanged for other blockchain-based assets, cash or any other asset. Such blockchain-based assets may also be in the form of any type of asset which is linked to a blockchain-based asset via a corresponding blockchain, such as a so-called coloured bitcoin asset.

Hence, the invention relates to a method for settling a transaction concerning an asset and being registered by forming part of a blockchain-based ledger for said asset, which ledger is arranged to keep track of transactions concerning the asset in question from senders to specified asset addresses, which transactions are signed using a private cryptographic key belonging to the sender in question, which method is characterised in that the method comprises the steps a) a central server identifying a seller, being associated with a seller address, and a buyer, being associated with a buyer address, of the said asset, at a specified price, and the central server producing a transaction identifier; b) calculating, based upon the seller address or corresponding public key, the buyer address or corresponding public key, and the transaction identifier, a M-of-N multi-signature address capable of being activated by a respective private key of both the seller and the buyer, which respective private key corresponds to said respective public key, wherein M<N; c) the seller signing a first transaction of the asset to the multi-signature address; d) the buyer signing a second transaction of the asset from the multi-signature address to the buyer address; e) the central server verifying the first and second transactions; and f) he central server settling the said price between the buyer and seller.

The invention further relates to a system for settling a transaction concerning an asset and being registered by forming part of a blockchain-based ledger for said asset, which ledger is arranged to keep track of transactions concerning the asset in question from senders to specified asset addresses, which transactions are signed using a private cryptographic key belonging to the sender in question, which system is characterised in that the system comprises a central server, arranged to identify a seller, being associated with a seller address and a buyer, being associated with a buyer address, of the said asset, at a specified price; to produce a transaction identifier; to calculate, based upon the seller address or corresponding public key, the buyer address or corresponding public key, and the transaction identifier, a M-of-N multi-signature address capable of being activated by a respective private key of both the seller and the buyer, which respective private key corresponds to said respective public key, wherein M<N; to monitor and verify, on the ledger, a first transaction of the asset to the multi-signature address; to monitor and verify, on the ledger, a second transaction of the asset from the multi-signature address to the buyer address; to verify the first and second transactions; and to settle the said price between the buyer and seller.

Moreover, the invention relates to a computer product for automatically partaking as a trading party in a transaction concerning an asset and being registered by forming part of a blockchain-based ledger for said asset, which ledger is arranged to keep track of transactions concerning the asset in question from senders to specified asset addresses, which transactions are signed using a private cryptographic key belonging to the sender in question, which computer product is characterised in that the computer product is arranged to, electronically, to a central server signal interest on behalf of an interested user to trade the said asset, at a particular price, identifying to the central server the user by a block-chain address or corresponding public key; to receive, from the central server, both a blockchain address or a corresponding public key identifying a counterpart user and a transaction identifier; to calculate, based upon both the said addresses or corresponding public keys and the said transaction identifier, a M-of-N multi-signature address capable of being activated by a respective private key of both the interested and the counterpart user, which respective private key corresponds to said respective public key, wherein M<N; in case the trade relates to a selling of the asset, to sign a first transaction of the asset to the multi-signature address; and, in case the trade instead relates to a buying of the asset, to sign a second transaction of the asset from the multi-signature address to the buyer address.

The computer product may be a software computer product, but it may also be constructed using a combination of software and purpose-made hardware.

In the following, the invention will be described in detail, with reference to exemplifying embodiments of the invention and to the enclosed drawings, wherein:
Figures 1 and 2 are respective overviews of a system according to the present invention;
Figure 3 is a flow chart illustrating a method according to a first aspect of the invention;
Figure 4 is a flow chart illustrating a method for generating a root private key;
Figure 5 is a flow chart illustrating a method for associating a user identifier with a particular transaction participant;
Figure 6 is a flow chart illustrating a method for constructing a publicly verifiable blockchain validation proof;
Figure 7 is a flow chart illustrating a method for revoking a validation proof;
Figure 8 is a flow chart illustrating a method according to a second aspect of the invention;
Figure 9 is a flow chart illustrating a method for matching two users;
Figure 10 is a flow chart illustrating a method for settling a transaction;
Figure 11 is a flow chart illustrating a settling method from the perspective of a selling user; and
Figure 12 is a flow chart illustrating a settling method from the perspective of a buying user.

In general, for a blockchain based asset ledger it is each individual account holder, and not a central account operator, who controls the ledger in question. An account is typically in the form of an address, which in turn may be, or be associated with, a public cryptographic key associated with a corresponding private key. As a result, it is inherently difficult to securely link account holders (key operators) to real world identities.

The secure association of a publicly verifiable blockchain key with a particular party according to the invention allows public keys to be shared between stakeholders to the ledger. By linking a public key to a particular party, it becomes possible to construct payment and settlement models which do not rely on a centralized custodian holding stakeholders' balances.

Hence, using a strong identity link and assurance that a payee is known and identified on the relevant blockchain, it becomes possible for secure payment and settlement models to be constructed directly between stakeholders to the ledger, and not using a centralized custodian.

In general, a blockchain public key, or address, is an account using which a payment, or balance, can be received from a payer. Balances, unspent-transaction-outputs (UXTO), in turn, are digital properties controlled by the holder of the corresponding private key associated with a specific blockchain public key. Transactions are constructed by collecting the UTXO, providing the appropriate unlocking scrips by means of applying the private key associated with the public key holding the UXTO, and then constructing new outputs assigned to a new public key.

Throughout this description, the terms "blockchain-based asset address" and "public key" will be used in an interchanging manner, and it is realized that the two correspond to each other or that at least one is derivable from the other.

A transaction may then be propagated by forwarding to connected nodes who each validate the transaction. Validated transactions, in turn, are aggregated into blocks, which may become part of the shared ledger. This way, the blockchain is gradually constructed, containing the cryptographic proof of several previous transactions, possibly even the entire history of all transactions in the asset in question.

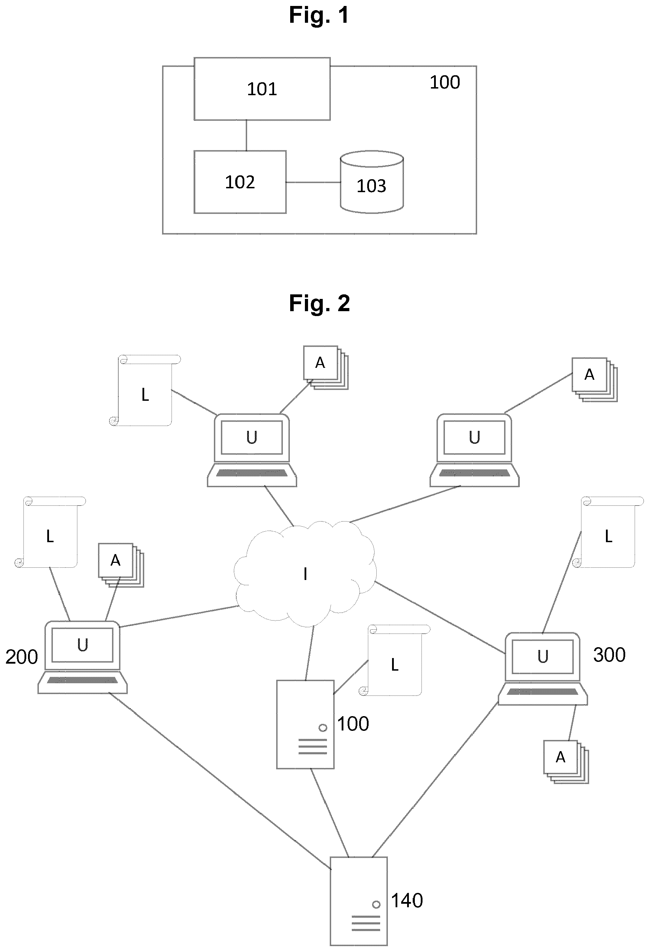

Figure 1 illustrates a system 100 according to the present invention, comprising an API or interface 101, arranged to communicate with users, financial institutions etc. via the internet. The system 100 further comprises a digital logic unit 102, in turn comprising a CPU or similar, and a database 103. The database 103 may be used to store system 100 relevant state data, such as participant registers and information; order books; current state of transactions; and so forth. The database 103 may also comprise current balances of cash deposit accounts for connected trading participants or users, as will be described in the following.

It is realized that the system 100 may be fully implemented on a standalone physical or virtual server, or in a distributed manner across several such physical or virtual servers, as the case may be. The system 100 may also be implemented as a component in a larger system. The functionality described herein may in general be implemented fully in software, or using a combination of hardware and software. In the following, the term "central server" will denote a functionally defined entity performing the central functions of the system 100. Hence, the central server may be the system 100, or a subpart of the system 100.

Figure 2 illustrates an example of a network in which the system 100 may be used according to the invention. I denotes the internet, interconnecting the system 100 as well as a number of users or participants U. The users U are stakeholders in a blockchain-based ledger L, such as the bitcoin ledger, or any other such ledger. At least some of the users U control, comprise or have access to respective copies of the ledger L. Some users U may instead use external ledger services or similar. The system 100 preferably also controls, comprises or has access to a respective copy of the ledger L. The ledger L of each user U may be identical to the ledgers L of other users U, or different users U may control differing subsets of a master ledger L. It may also be the case that the respective ledger L of different users U at any one given time may be updated to different extents, due to network lag and similar. In the following, it is assumed that there is one unambiguous version of the ledger L which may be digitally and electronically access by any user u.

In general, the users U can transfer blockchain-based assets between them directly and bilaterally, over the internet I. Such transfers are conducted from one blockchain address A to another blockchain address. Each user U may control one or several such blockchain addresses A.

As used herein, an "address" is an identifying piece of information, which is or unambiguously associated with, a public key of the above described type, which public key is recognized by the users U for use in verifying transaction signatures concerning the blockchain asset in question. That the address may be unambiguously associated with the public key means that it is possible to at least unambiguously identify the public key starting off from the address and/or unambiguously identify the address starting off from the public key. This may imply following a link or association, or the use of a predetermined algorithm, comprising hash calculations, binary-to-text encodings, etc.

Reference numerals 200 and 300 denote two exemplifying trading participants or uses in a method according to the present invention, each with a corresponding computing device. These two users 200, 300 are each connected to a finance institution 140, either one and the same finance institution 140 for both users 200, 300 or different finance institutions 140. The system 100 is also connected to the finance institution or institutions 140. The connections to the finance institution 140 may or may not be over the internet I. It is understood that the method steps described herein, in which the users U are involved, are generally performed by a corresponding electronic computing device of the user U in question. Preferably, such a computing device is a general-purpose computer, smartphone or similar, and the method steps are in general automatically performed using a piece of software which is executed on or from the computing device in question. For instance, such software functionality may be installed as a local application running on the hardware of the computing device in question; a remote software running on the central server or anywhere else and accessed as a web service or similar over the internet I, or any suitable combination of such approaches. The functionality may also be implemented in a combination of software and hardware, as the case may be.

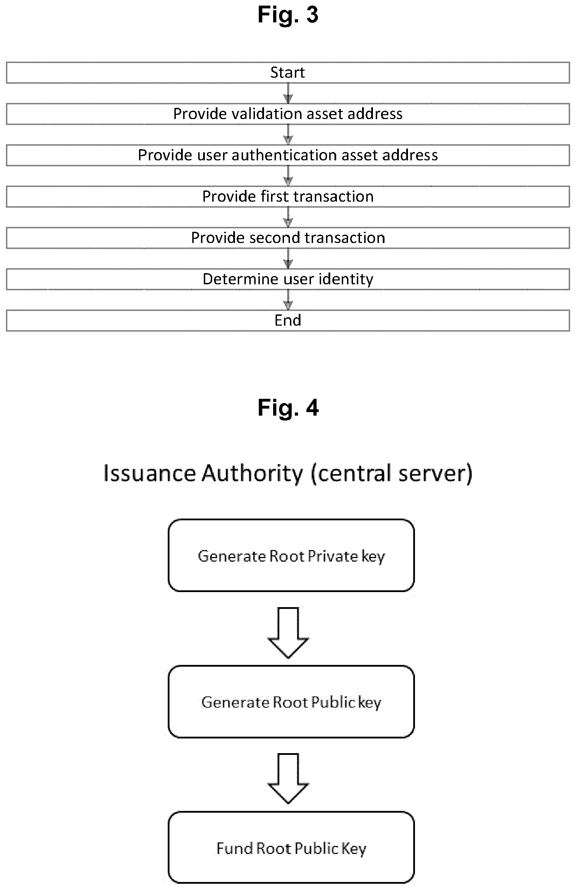

Figure 3 illustrates a method according to a first aspect of the invention, for creating a user identity. In particular, this method is for creating a digitally and electronically stored user identity using a blockchain-based asset ledger L.

Herein, the term "blockchain-based asset" denotes an asset the transfer of which is performed using a digital and electronic transaction, identifying details of which are stored in, and forms part of, a blockchain. As such, the transaction in question may be proved at a later point by reading the contents of the blockchain in question. Specifically, the mathematical construction of the blockchain is only possible using the said transaction identifying details, due to the use of chained mathematical one-way functions to at least one of which the transaction details forms an input. Similarly, a "blockchain-based asset ledger" is a digitally stored ledger of such blockchain-based transactions, as described above. Such a ledger may, in fact, be the blockchain itself, or a set of pointers to specific transactions forming part of the blockchain. Specifically, such a ledger may be a collection of transaction specifications, which transaction specifications comprise one-way function-based intra-transaction links so that the transactions are interlinked in a straight and/or forked chain structure.

As a non-limiting example, bitcoin is such a blockchain-based asset, and the bitcoin ledger is such a blockchain-based asset ledger. Hence, in a preferred exemplifying embodiment, the various assets involved in the method are in fact particular bitcoin amounts.

By the expression "one-way function" is meant a mathematical function accepting at least one input and providing an output, where it is very difficult, and in practice impossible, to calculate an input based upon the output, but where it is relatively simple and fast to calculate the one-way function output based upon the input. Such one-way functions are well-known in the art as such.

In particular, the ledger L is arranged to keep track of transactions of the above indicated type, concerning the blockchain-based asset in question from senders to specified asset addresses. Here, that the ledger L "keeps track of" such transactions means that information is available by interpreting information comprised in the ledger L, which information provides the possibility for any user U to verify the existence and possibly also the validity of such transactions. In this context, a "sender" and an "addressee" may be respective addresses of the above described type, themselves being or being associated with public cryptographic keys. That the transactions are to "specified" addresses means that each transaction comprises or is associated with information to at least one specific address which may be used to spend the transferred asset in subsequent transactions.

Furthermore, the said transactions are signed using a private cryptographic key belonging to the sender in question. Preferably, a transaction of the present type is not considered valid if such a signature is not present and detectable. The private key is preferably one part of a public-private key pair which is arranged so that a public key can be used to verify the authenticity of a signature of a piece of information made using the private key. Such asymmetric public/private key pairs are well-known in the art as such, and are also used in Public Key Infrastructure (PKI) implementations. The private key signature may form part of the blockchain-based asset transaction in question itself. In general, a public key can preferably be generated using the corresponding private key using well-known mathematic methods.

Moreover, the said transactions are registered by forming part of the said ledger L for later verifying of the transactions of the type in question, as described above.

According to the invention, in a first step the method starts.

Thereafter, at least one validation asset address is provided to or by the said central server, which may be, or form part of, the system 100 as discussed above. Hence, the validation asset address may be provided by the central server itself, such as from a pool of available validation addresses stored with the central server, such as in the database 103. In the particular example in which the asset is a bitcoin asset, the central server may produce a private validation asset key, which is then used to calculate a corresponding public validation asset key, which in turn is used to produce the validation asset. Then, the central server may store both the private and public validation asset keys, while the validation address is stored on the bitcoin blockchain. Alternatively, the central server may be provided with such a validation address from an external provider, either from within the system 100 or from a system-external party, and preferably provided from an available pool of such validation addresses held by such a party.

Herein, a "validation address" is an address of the above defined type, preferably an address which is readily recognizable by each user U as a normal address for use in transactions concerning the blockchain-based asset in question. Hence, the validation address can occur as addressee in transactions, and can hence be associated with spendable asset amounts. In particular, it is possible to direct a transaction to such a validation address as the addressee of the transaction in question.

The said at least one validation address, and in particular a corresponding public validation key, is associated with a private validation key, which in turn is controlled by the central server. Moreover, the at least one validation address is funded with a certain original amount of the asset in question. Herein, that an address is "funded" with a particular amount means that the address can be used as an originating address in a transaction transferring the asset amount in question to a different address. In other words, the validation address in question is associated with the asset amount in question as a spendable amount.

In a later step, a user authentication asset address is provided to or by a first user 200 for which first user 200 the user identity is to be created. Similarly as for the validation address, the user authentication address is a normal address for the blockchain-based asset in question, and may be, or be unambiguously derivable from, a corresponding user authentication public key.

The user authentication asset address, and preferably in particular said user authentication public key, is associated with a corresponding private authentication key held and controlled by the user.

In a later step, a first transaction is provided, which first transaction specifies a transfer of a certain authentication amount of said asset from the validation asset address to the authentication asset address. The authentication amount is a particular, preferably predetermined, amount of the asset in question, such as a particular fraction number of bitcoins. In case there are transaction costs associated with transactions concerning the blockchain-based asset, such as may be the case with bitcoin, it is preferred that the authentication amount is more, preferably substantially more, such as at least 10 times more, than corresponding transaction costs required to spend the authentication amount in a later transaction.

Furthermore, the first transaction is signed using the mentioned private validation key. This signature is hence produced by the central server. The "providing" of the first transaction, in other words the definition of the first transaction, is preferably also initiated by the central server.

In a later step, a second transaction is provided, specifying the transfer of a first share of the said authentication amount, a validation amount, from the authentication asset address to one of the said validation asset addresses. Preferably, the validation asset address which is the addressee of the second transaction is the same validation asset address that was the originating address of the first transaction. The validation amount is less than the authentication amount. Preferably, the validation amount is also more, preferably substantially more, such as at least 10 times more, than corresponding transaction costs required to spend the validation amount in a later transaction, in case the blockchain-based asset is associated with transaction costs as discussed above. The validation amount is preferably either a predetermined absolute value, in terms of the asset in question, or a predetermined share, such as 50%, of the authentication amount, possibly after deduction of transaction costs. In general, it is preferred that both the authentication amount and the validation amount is deterministic in the sense that it is possible for a verifying third party to determine the expected respective size of the authentication amount and the validation amount.

The second transaction further defines the transfer of a second share of the authentication amount, preferably all which remains of the authentication amount after deduction of the validation amount and any transaction costs associated with the second transaction, back to the authentication asset address. Hence, this second share corresponds to a change amount in the case the asset is a bitcoin amount.

The second transaction is signed using the private authentication key, preferably by the first user 200 holding this key.

Then, in a later step, the said user identity is determined such that the authentication asset address is, or is unambiguously associated with, the user identity in question.

Thereafter, the method ends.

Using such a method, a publicly verifiable blockchain key can be used to securely identiy the first user 200. An issuing authority, such as an operator of the system 100 and hence of the central server, may generate one, or more, root private validation key(s) with which it can generate one, or more, root public validation key(s). The root public validation keys may be made known to the public as the oracle keys which third parties, such as a second user 300, can query to match the first user's 200 blockchain address by tracing the transaction history between the public keys in question. After the above described method steps, the root public validation keys, or their corresponding addresses, will hold a respective balance, funded by the central server as the issuing authority. The root public validation keys are held with each full blockchain node, the root private validation key is held with the said issuing authority.

The user identity may hence be easily and securely verified by anyone having access to public blockchain ledger L information. Furthermore, the user identity may also easily be revoked, both by the first user 200 and by the central server, as will be described below.

According to a preferred embodiment, the authentication asset address is determined based upon a unique user identifier, which identifier is not the said user identity but is provided to the user from the central server. This way, the user identity can be securely tied to a user identity which is controlled by the central server, which increases security. That the user identifier is "unique" means that no two user identities are equal across all user identifiers created using the present invention, at least by one and the same central server or even system 100. The user identifier may preferably be a cryptographically secure pseudo-random number or string. The user identifier preferably also stays the same over time, at least as long as the first user 200 is a user of or subscriber to the system 100. Preferably, the central server may provide the user identity to the first user 200 at the time of the first user's 200 first registration with the system 100.

Furthermore, the authentication asset address is preferably determined based upon a certain original user asset address, or a corresponding public key, which original user asset address is preferably also a normal blockchain-based asset address as discussed above. The original user asset address is preferably an asset address controlled by the first user 200, in the sense that an original user asset private key, corresponding to the original user public key and address, is held by the first user 200. Such an original user asset private key is then, in turn, associated with a corresponding original user asset public key as mentioned, and the original user asset address is or is associated with this original user asset public key. Preferably, the user asset address is unambiguously derivable from the original user asset public key.

In fact, the original user asset address may preferably be any valid blockchain-based asset address controlled by the first user 100. Hence, in the bitcoin case, the original user asset address may be any valid bitcoin address the private key of which is held by the first user 100.

According to a preferred embodiment, the method further comprises providing, from the central server to the first user 200, an OTP (one-time password). The OTP may be delivered via surface mail or in any other suitable secure manner, so that the OTP remains secret between the central server and the first user 200. Then, the first user 200 may perform a mathematical calculation based upon the OTP and the said original user asset address, or the said corresponding public key, such as signing the public key corresponding to the original user asset address. The, result of the said calculation is then sent, electronically, such as via the open internet I, from the first user 200 to the central server. Preferably, the calculation is of a type making it impossible or practically impossible to calculate the value of the said public key based upon the result of the calculation. Specifically, the calculation preferably comprises the use of a one-way function.

Then, the method further comprises using the received result to verify that both the OTP and the original user asset address were used in said calculation. In particular, a validation function of the central server may securely validate and establish which user (namely, the first user 200) with which the sent result, i.e. the OTP proof, is associated. This can be done since the central server has knowledge of the OTP, and also of the original user asset address (since the latter is public). Then, the central server may associate the public key of the first user 200 with the first user 200 in the database 103 for future reference.

As described above, the authentication asset address is preferably determined based upon the original user asset address or corresponding public key, and also based upon the user identifier provided to the first user 200. In particular, it is preferred that the public authentication key is calculated based upon the original user asset address using an elliptic curve Diffie-Hellman mathematical function. For instance, the public authentication key may be calculated by multiplying the first user 200 identifier to the public key corresponding to the original user asset address, using the said DH function.

After the calculation of the public authentication asset address, and/or the corresponding public key, this value can be publicly shared. However, the corresponding private key corresponding to the authentication asset address is held secret with the first user 200. Using an elliptic curve function to calculate the authentication asset public key based upon the original asset public key, which is in turn associated with the original asset private key, the authentication asset public key can be used to validate signatures made using such a corresponding private authentication asset key which has been calculated based on the original asset private key in the corresponding manner as the public authentication asset key. In other words, the private authentication asset key is preferably determined based upon the original user asset private key, and also based upon the said user identifier, and may in particular be calculated based upon the original user private key using the same DH function as used for the calculation of the corresponding public authentication key, such as by multiplying the first user 200 identifier to the private key corresponding to the original user asset address, using the said DH function. Thereafter, the private authentication asset key will be useful as the private key of a public/private key pair in which the authentication asset public key is the corresponding public key.

According to a preferred embodiment, the private authentication key is hence calculated only by the first user 200 and thereafter held by the first user 200. Moreover, it is preferred that the public authentication key is calculated by the central server, such as in the way described above. It is further preferred that the first user 200 also calculates the public authentication key, preferably independently from the central server. It is noted that both the first user 200 and the central server has all required information to perform this calculation.

In order to be able to perform the said elliptic-curve calculation, it is preferred that the unique user identifier is bound to the security parameter of an underlying elliptic curve in the sense that it has a suitable corresponding length. Preferably, the user identifier has a length of at least 16, more preferably at least 32 bytes.

At a later point, the method may comprise a user identity verification step, comprising the verification that the said first transaction was indeed made from a validation public key or asset address operated by the system 100 to the authentication public key or asset address, further comprising the verification that the output received by the authentication public key or asset address was spent back to the validation public key or asset address, with part of the balance returning to the authentication public key or asset address as a return transaction, according to the predetermined proportions as discussed above.

Then, it is preferred that such verification step is not considered successful in case it finds that there are further transactions of the outputs, either from the authentication public key or asset address, or from the validation public key or asset address.

Hence, according to a preferred embodiment, an asset amount remaining with the authentication public key or asset address after said second transaction is spent in a further transaction, from the authentication public key or asset address. Then, such further transaction constitutes a revocation of the user identity in question, made by the first user 200.

Similarly, the validation amount is spent from the validation public key or asset address in a further transaction, from the validation public key or asset address. Then, such further transaction constitutes a revocation of the user identity in question, made by the central server.

Hence, a method and a system according to this first aspect of the present invention allow for the construction of an easily validated user identity, whereby anyone can verify that an authentication public key or asset address is associated with an issuing authority by examining the transaction history, which is as such publicly available for all users U and the central server via the blockchain ledger L. At the same time, both the first user 200 to which the user identity relates and the central server, being the issuing authority, may easily revoke the user identity by transferring either the output on the authentication public key or asset address (in the case of the first user 200), or the output on the validation public key or asset address which was returned by the first user 200 when the authentication public key or asset address was set up (in the case of the central server).

In the following, a detailed example will be described of the said first aspect, with reference to Figures 4-8.

Figure 4 shows a flow diagram for generating a root private key, from which a root public key can be generated, and the subsequent initial funding of the root public key. This root public key is a validation public key as described above, and it is the central server which generates the root keys as an issuance authority. In this particular example, it is assumed that the blockchain asset is a bitcoin asset, and that the blockchain is the bitcoin blockchain.

In a first step, the central server may generate at least 128 bit, preferably at least 256 bits, of entropy (randomness, preferably a cryptographically secure pseudo-random number) in order to create the root private key. From the 256 bits string of entropy (the root private key), it subsequently uses elliptic curve multiplication, which is a one-way irreversible cryptographic hash function, to generate a root public key corresponding to the root private key. Once the private - public key pair has been generated, the central server funds the public root key with a certain blockchain-based asset balance, represented by an amount of unspent-transaction-outputs (UXTO). The public root key is made known to the public as an "oracle key" which may be queried on the blockchain to verify that a particular public key is associated with it.

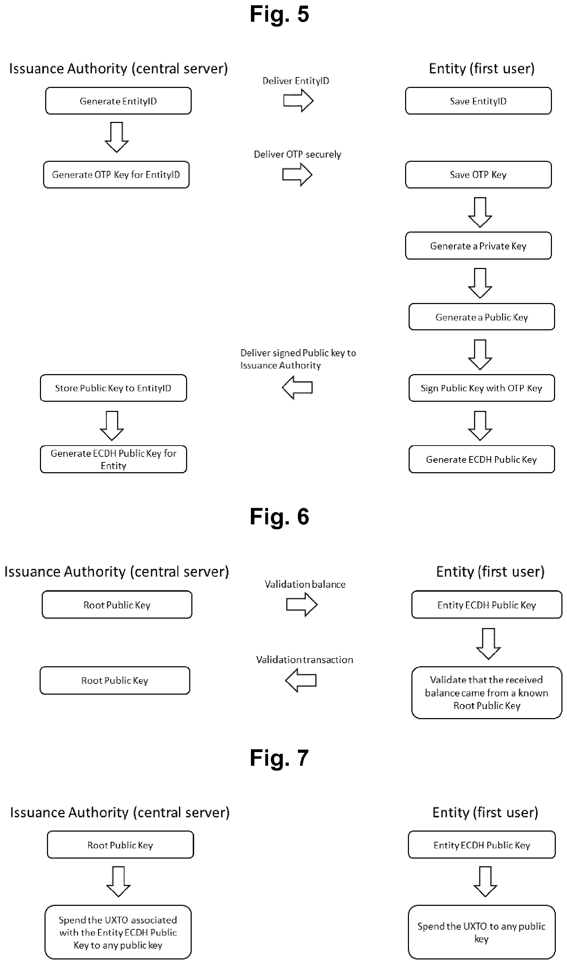

Figure 5 shows a flow diagram for associating a user identifier ("EntityID") with a particular participant, in this case the first user 200. Moreover, Figure 5 illustrates the generation of an OTP key by the central server as an issuing authority; the delivery of the OTP key; the generation of a private - public key pair by the first user 200; the submittal of the first user's 200 public key; and the generation of an ECDH (Elliptic Curve Diffie Hellman) public key of the first user 200.

Hence, in a first step, the central server may generate at least 256 bits of entropy of the said type, in order to create the user identifier. The user identifier is associated with a particular participant, in this case the first user 20, applying with the central server as an issuance authority. The user identifier is of the same length as the blockchain's underlying elliptic curve, which implies that all curve primitives should be aligned with this length, in other words that all primitives used in relation to the model should have a security parameter at least equivalent to that of the elliptic curve in question.

Thereafter, the central server delivers the user identifier to the first user 200. The user identifier should be constant for the life of an account of the first user 200 with the central server, so that multiple public keys can be submitted for ECDH validation.

In a subsequent step, the central server may generate at least 256 bits of entropy of the above said type, in order to create the OTP key. The OTP key may be converted to a mnemonic code or sentence, which simplifies human interaction as compared to a raw binary or hexadecimal representation. In a next step, the central server may securely deliver the OTP key, or the converted OTP key, to the first user 200 by means of an encrypted channel, postal service, or another suitable process. The user saves the OTP key.

Thereafter, the first user 200 may generate at least 256 bits of entropy of the above said type, in order to create a private key, namely the original private key. This private key will be the master private key through which the first user 200 controls all its subsequent public keys as described in the following. Each such public key may be, or be associated with, a different asset address of the first user 200.

Thereafter, the said master private key is used to generate a public key (the original public key) through the use of a one-way elliptic curve multiplication function. Then, the first user 200 applies a cryptographic signature, represented by (using) the OTP key, to the said public key derived from the said master private key. This signing is done so that the central server can be certain that the entity who signed the public key in question is the same entity (namely, the first user 200) who applied for their service.

Thereafter, the first user 200 delivers the hence signed public key to the central server. Upon receipt of the signed public key, the central server uses the OTP signature to determine which user U submitted the public key for validation, and can conclude that it was in fact the first user 200. The central server then stores the original public key in the database 103, and associates it with the first user 200. As a result, both the central server, as well as the first user 200 itself, now have the required information to generate the authentication public key as an ECDH public key. This is done by applying elliptic curve multiplication to the original public key with the user identifier.

Figure 6 shows a flow diagram for constructing the publicly verifiable blockchain validation proof. In a first step, one, or several, unspent-transaction-outputs (UXTO), are selected from the root public key (the validation public key or address, as the case may be) to which the central server holds the corresponding private key. A transaction is constructed by collecting the UTXO in question, providing the appropriate unlocking scrips by means of applying the validation private key associated with the validation public key holding the UXTO, and then constructing new outputs assigned to the first user's 200 public authentication public key ("Entity ECDH public key"). Once the transaction contains all the necessary information to process, the central server publishes the transaction to the blockchain network for validation and propagation.

Once the first user 200 detects the transaction incoming to its authentication address, the first user 200 will need to validate that the transaction originates from one of the known and public validation public keys (a "root public key"). Then, the first user 200 is required to spend back half the balance received, minus any network fees, to the root public key in question, in order to prove control over the authentication private key associated with the public authentication key. The transaction is such that the entire original UXTO is spent back, but where half of the UXTO is sent back to the authentication public key as a return transaction.

As a result of the above steps, the authentication public key is provably validated by the root public key, and any external party dealing with the first user 200 can examine the transaction history between the two addresses.

Figure 7 shows a flow diagram for revoking the validation proof by either the central server or the first user 200. The central server wishes to revoke validation for the first user 200, and is able to do so by spending the UXTO which was returned back from the ECSH Public Key (the authentication public key) when the validation structure was set up according to the above. Anyone validating the ECSH Public Key will immediately notice that the UXTO which was spent back to the root public key (the validation public key) has subsequently been transferred. As the present invention allows for both parties to revoke the ECDH Public Key verification structure, and thereby the user identity, the first user 200 itself may also, at any time, apply its authentication private key to the UXTO and spend the fund anywhere. This will then also effectively invalidate the user identity.

In the following, a second aspect of the invention will be described, for settling a transaction concerning a blockchain-based asset. It is understood that the method according to the first aspect of the invention may advantageously be performed together with a method according to the second aspect, to form an integrated method in which a respective user identity of at least one party, preferably both parties, to the transaction settled according to the second aspect is or are created using the first aspect. Similarly, one and the same system 100 comprising the central server may be arranged to both create such user identity or identities and also to settle a transaction between such identified parties according to the second aspect.

Hence, according to this second aspect, the present invention relates to a method for settling a transaction concerning an asset. The asset is preferably blockchain-based, with the interpretation discussed above. In particular, the asset is registered by forming part of a blockchain-based ledger L, of the above type, for said asset. The ledger L is arranged to keep track of transactions concerning the asset in question from senders to specified asset addresses, which transactions are signed using a private cryptographic key belonging to the sender in question. Specifically, the users U may constitute or control such senders and receiving addresses.

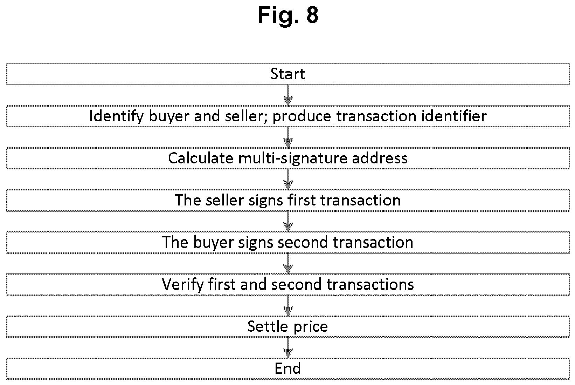

Such a method is generally illustrated in Figure 8, in which the method starts in a first step.

Then, the method comprises a step in which the central server identifies a seller. The seller is a user U. In the following, we will, for illustrative purposes, assume that the first user 200 is the seller and the second user 300 is a buying user.

Preferably, at least one of the first user 200 and the second user 300, such as at least the selling first user 200, preferably both the first 200 and the second 300 users, have been securely identified in the manner described above, in connection to the first aspect of the invention, such that a respective first user identity and/or a second user identity have been created based upon a respective authentication address as described above. Such identity creation may be performed in an initial set of steps according to the invention.

The first user 200 is associated with a seller blockchain-based address of the above described type, with a respective corresponding public key. As discussed above, the public key preferably is or can be used to unambiguously calculate the seller address.

The central server also identifies a buyer, in this case the second user 300, also being associated with a buyer address of the above described type, with a corresponding public key. As discussed above, the public key preferably is or can be used to unambiguously calculate the buyer address.

The first 200 and second 300 users are hence identified as a respective buyer and seller of the blockchain-based asset in question, having a certain size, at a specified price. Herein, a "price" can be any value or valuable asset, such as a cash price or a value defined in terms of another blockchain-based asset. Preferably, the price is a cash price, in other words defined in terms of a particular cash value in a conventional currency, which is easily deposited from a respective financial institution 140 of the user in question with the system 100, as described below, ahead of the transaction.

Preferably, the transaction which is settled using the present invention is bilateral, meaning that there is only one seller and only one buyer involved in the transaction.

The central server further produces a transaction identifier, which is preferably a unique transaction identifier. That the transaction identifier is "unique" means that no two transactions settled by the system 100 will have the same transaction identifier. That the transaction identifier is "produced" may mean that it is calculated, received from an external source, or any other suitable way of producing a transaction identifier being useful for identifying the transaction to the central server as well as to the transaction parties 200, 300.

The transaction identifier may be produced as at least 256 bits of entropy as described above in relation to the client identifier, preferably as a cryptographically secure pseudo-random number.

The above described three substeps - the identification of the buyer, the seller and the production of the transaction identifier- may be taken in any mutual order.

Thereafter, the method comprises calculating, based upon the said user (first user 200) address (or the seller public key corresponding to the seller address), the buyer (second user 300) address (or the buyer public key corresponding to the buyer address) and the said transaction identifier, a M-of-N multi-signature address capable of being activated by a respective private key of both the seller and the buyer, which respective private key corresponds to the said respective public key, which in turn is or is unambiguously associated with the respective seller or buyer address, and wherein M<N. It is realized that M is at least 1, and that N is therefore at least 2. It is further realized that the buyer 300 and the seller 200 are both signatory parts of the multi-signature address.

A multi-signature address is a blockchain-based address of the type described above, but being associated with more than one private key, where more than one such private key is required to further (in a downstream transaction) spend any blockchain asset amount addressed to the address. Preferably, the multi-signature address is a multi-signature transaction script hash address, comprising a script produced using the corresponding public key corresponding to the private keys that must be used in order to further spend the said asset amount. Such multi-signature addresses are, for instance, well-known in relation to bitcoin.

That the multi-signature address is an M-of-N multi-signature address means that there are N predetermined private keys that may be used for further spending the said amount, and that any combination of M of these private keys is sufficient to further spend the amount.

In a next step, the first user 200 signs a first transaction, of the blockchain asset in question to which the transaction pertains, to the multi-signature address created in the previous step. Thereafter, the multi-signature address is hence funded with the blockchain asset, and awaits claiming by the second user 300 (the buyer).

Thereafter, the second user 300 signs a second transaction of the asset in question, from the multi-signature address, to any address selected by the second user 300. For instance, the address of the second transaction may be the above described address of the second user 300 (the buyer address) which is used to create the multi-signature address.

In a next step, the central server verifies the first and second transactions. In other words, the central server monitors activity regarding the multi-signature address, which activity is available for monitoring on the normal blockchain ledger L on which the transaction's asset is recorded, and preferably verifies that the first and second transactions indeed occur as expected using the multi-signature address, and further preferably involving the correct parties (that the second 300 user actually applied his or her private asset key in the second transaction, and possibly also that the first transaction actually originated from the first 200 user). Preferably, the central server also verifies that the transacted asset amount is correct (the amount to which the transaction amounts, possibly minus any transaction costs).

Then, when the first and second transactions have been verified, the central server settles the said price between the buyer and seller. After this step, the transaction is finished and the method ends.

It is realized that the "price" and the "asset" are generally not of the same asset type. Hence, herein, "settlement" means that the "price" changes owners, not that the "asset" is transferred in the second transaction.

The first transaction may be from the first user's 200 address (the seller address), which was used to construct the multi-signature address, or from any other address, preferably an address which is verifiably controlled by the first user 200.

Specifically, in the present method according to the second aspect of the invention, a matching and settlement model is proposed, in which a trusted third party (the central server) holds a cash balance on a private cash ledger, but in which the blockchain stakeholders (the first 200 and second 300 users) maintain control over the blockchain-based asset (as opposed to the price). The central server does not act as a custodian for the blockchain-based asset, and never controls the actual blockchain-based asset to which the transaction pertains, and transaction of which is to be settled between the users 200, 300. The block-chain-based asset leg of the transaction may be finalized bilaterally between two matched parties (first 200 and second user 300), while the price leg (such as a cash currency price) of the transaction may be finalized by book entry shifts in said private cash ledger. The trusted intermediary may be utilized to temporarily hold any cash balance offered as payment for the blockchain asset until the blockchain-based asset holder in question has provably delivered the blockchain-based asset in question to its trade counterpart, at which time the central server may release the reserved cash currency balance offered as payment for the blockchain-based asset.

In particular, the central server may comprise a ledger administration service module which controls a private cash ledger comprising private ledger cash balances recorded in the accounts of participants with the service. The cash ledger may be digitally stored in the database 103. The database 103 may further comprise an account system that records verified account holders (users U), their respective blockchain public key, and the balance of the private ledger (for example, cash currency) held by the individual account holder with the system 100. The accounts may be financed from the respective financial institution 140, such as in the form of actual cash deposits to the central server or approved credit lines. The database 103 may further hold a record for each account change, and matched trade, recorded with the central server. The central server may further comprise a blockchain monitoring module, arranged to perform a validation process which determines if a block-chain settlement transaction has taken place according to the above, and when the transaction has reached settlement finality. The central server may also use authentication techniques to verify identifying information and perform Know-Your-Customer (KYC) and Anti-Money Laundering (AML) checks.

Before a transaction is initiated and settled as described above, the central server may perform a price discovery process using a limit orderbook or the like, which is per se well-known within the field of financial transaction systems. For instance, the price discovery process may be conducted through a request-for-quote (RFQ) negotiation process initiated by a user U to the system 100 and in particular to the central server. The RFQ then acts as a non-binding solicitation for a quote and provides the basic terms for other users U to formulate respective quotes to the requesting user U. Both the quote and the responsive quote are preferably non-binding. As an example, the negotiation process may be as follows:
1) RFQs are submitted, from respective requesting users U, as an electronic notification sent to the central server expressing interest in a specific and specified blockchain-based asset, for a specific asset size, together with a specific blockchain public key.
2) In response to such an RFQ, an RFQ notification is disseminated to all users U, together with a produced unique transaction identifier, suitable for elliptic curve multiplication, alerting the said users U to the existence of participant interest.
3) During a predetermined response period, users U may submit, modify or cancel responsive quotes which contain the responder's respective own blockchain public key.
4) Once the predetermined response period is concluded, the requesting user U is automatically matched with the most competitive responsive quote received, according to a predetermined quote ranking definition. This match defines a trade transaction.
5) The details of the matched trade transaction are presented to the buyer 300 and the seller 200, and the process moves to the settlement method according to the above described.

The settlement model according to the present invention offers an automatic, secure, rule-based, trust-less, mutual-acceptance settlement, whereby both participant users 200, 300 must actively execute a respective blockchain-based transaction for a quote to be considered accepted. This creates a double confirmation settlement process, requiring both of said transactions for the details of the trade transaction to be considered accepted. This mutual acceptance of the terms of the trade transaction is publicly verifiable on the relevant blockchain ledger L. Through this system and method, two users 200, 300 can finalize a blockchain asset transfer bilaterally without an intermediary, while the cash settlement can happen on a private cash ledger, without relying on a blockchain-based asset central security depository keeping track of the blockchain-based asset in question.

Using the details contained in the matched quote described above, the subsequent process may be as follows:
1) Validation checks, if possible, are made, by each user 200, 300, to the counterparty's blockchain public key.
2) Both participant users 200, 300, as well as the central server, combine the two counterparties' blockchain public keys together with the unique transaction identifier, and generate a unique 1-of-2 settlement public key, for instance as described above.
3) The seller 200 (of the blockchain-based asset) executes a blockchain transaction, delivering the agreed-upon blockchain-based asset, with the specified size, to the settlement public key ("the pay-in transaction").
4) The buyer 300 (in other words, the user selling the private ledger balance, which may be a cash currency), upon detection of the blockchain settlement pay-in transaction, executes a settlement "pay-out blockchain transaction" by applying his private key to the settlement public key.
5) Once the central server detects the mutual on-blockchain acceptance of the terms of the trade transaction (detected as the existence of the said pay-in and pay-out transactions), a post-trade validation control module of the central server is arranged to monitor the block-chain ledger L for settlement finality and then to update the private ledger accounts.

According to a preferred embodiment, the said multi-signature blockchain-based address is a 1-of-2 multi-signature address, such as a 1-of-2 multi-signature transaction script hash address.

Preferably, the buyer 300 and seller 200 identification step described above also comprises at least one of the buyer 300 and the seller 200, preferably both the buyer 300 and the seller 200, providing to the central server, as a part of a specified respective quote or offer for the blockchain-based asset in question, the said respective seller and buyer addresses or respective corresponding public keys. In particular, and as mentioned above, the said quote or offer is preferably non-binding to the buyer 300 and seller 200 in question who places the said quote or offer.

Specifically, it is preferred that the said buyer 300 and seller 200 identification step comprises, or is preceded by, a request for quote process of the above-described type, in which an offering buyer or seller provides, to the central server, an offer for the blockchain-based asset in question at a specified size, whereupon the central server disseminates the offer, together with the offering user's U address and the said transaction identifier, for quote giving by counterparty users U.

Further particularly, in the preferred case in which the buyer 300 and the seller 200 are both securely identified using a user identity creation method as described above, the said buyer 300 and seller 200 identification step further comprises the central server verifying the seller address and the buyer address by using such a user identity method for creating a reliable user identity for at least one of the buyer 300 and the seller 200, preferably for both the buyer 300 and the seller 200. Preferably, the buyer address and the seller address (or public key) used for creating the multi-signature settlement address, as the case may be, is or are the same as used for creating the said user identity.

As is the case for the user identifier, described above, the transaction identifier is preferably bound to a security parameter of an underlying elliptic curve, in the sense that it has a suitable corresponding length. Hence, the transaction identifier is preferably of the same length as the blockchain's underlying elliptic curve, which implies that all cure primitives should be aligned with this length, in other words that all primitives used in relation to the model should have a security parameter at least equivalent to that of the elliptic curve in question. Preferably, the transaction identifier is at least 16, more preferably 32 bytes.

Regarding the multi-signature address, it is preferably calculated by at least the central server, in particular if the multi-signature address is a multi-signature script hash address. Hence, at least the central server calculates the script hash in question. However, according to a very preferred embodiment, the multi-signature address, preferably the script hash in question, is independently calculated by both the seller 200, the buyer 300 and the central server. In this context, the term "independently" relates to a timing of the calculation - it is realized that these three parties use the same (identical) information for performing the said calculation.

In this context, it is also very preferred that the script hash in question is unique, meaning that no two transactions in the system 100 use the same script hash. Preferably, it is also kept secret among the buyer 300, the seller 200 and the central server. As such, it has the capability of uniquely and deterministically identifying both the buyer 300 and the seller 200, as well as the settlement as such - it also protects the privacy of all involved parties since it cannot be reproduced without a set of data which is only known the three parties (the buyer 300, the seller 200 and the central server).

According to a preferred embodiment, which will be exemplified in more detail below, the multi-signature address is calculated based upon two intermediate public keys, each of which has been calculated, using an elliptic curve function, based upon the buyer 300 block-chain address and the seller 200 blockchain address, as well as upon the said transaction identifier. In particular, it is preferred that the two intermediate public keys are both calculated based upon each of the buyer 300 public key and the seller 200 public key, both of which calculations are based upon the transaction identifier. This provides a way for both the central server, the buyer 300 and the seller 200 to each calculate the multi-signature address. In particular, it is preferred that the transaction identifier is multiplied ECDH to each of the buyer 300 and seller 200 public keys. The resulting two new intermediate public keys are then preferably combined in a so-called P2SH (pay-to-script-hash), where the script is set up so that 1-of-2 public keys can control the resulting multi-signature settlement address.

According to a preferred embodiment, the said second transaction takes place using a signature by the buyer 300 using a private key corresponding to the buyer 300 public intermediate key, calculated based upon the private key of the buyer 300 using the same ECDH multiplication with the transaction identifier as used to calculated the public intermediate key, which private key corresponds to the buyer 300 public key and the buyer 300 block-chain address described above.

Further preferably, after the first transaction but before the second transaction, the seller 200 may redeem the blockchain-based asset by, using the multi-signature address and in particular the multi-signature script hash, signing, using the private key of the seller 200 corresponding to the said seller 200 public key and seller 200 address, a redemption transaction of the blockchain-based asset from the multi-signature settlement address, whereupon the method is aborted and the settlement is never finalized. In particular, this means that the settlement of the price is not performed by the central server.

In another preferred embodiment, the buyer 300 may simply refrain from performing the second transaction, whereupon the method is also aborted and the settlement is never finalized, specifically including price settlement. Preferably, the central server may impose a timer, so that the buyer 300 must perform the second transaction in a publicly verifiable way on the blockchain ledger L within a predetermined amount of time unless the central server will deem the buyer 300 to have refrained from performing the second transaction. The predetermined time is preferably more than 2 seconds, preferably more than 10 seconds. Moreover, the predetermined time is preferably less than 1 hour, preferably less than 30 minutes.

As has been described herein, the settled blockchain-based asset may be a bitcoin or other blockchain-based asset which is defined based upon blockchain ledger L registered transactions as such. However, it is realized that more derived blockchain-based assets are also possible, such as coloured bitcoin assets or other assets that are defined within blockchain-based asset transactions, where the definition of the asset is contained within the block-chain ledger L transaction as such. Hence, the blockchain-based asset to be settled is preferably an amount of a blockchain currency such as bitcoin, or an asset which is carried on a currency blockchain as a colouring of the currency in question.

Regarding the price, it may be defined as a currency amount in any suitable conventional cash currency. However, the price may also be defined in terms of other asset classes or types, such as in a different blockchain-based asset than the settled one. It is, however, preferred that the central server receives deposits corresponding to or being the price from the buyer's 300 financial institution 140 before the transaction identifier is produced. The price is preferably settled by a simple account adjustment of respective deposit accounts held by the central server in the database 103 on behalf of the users U. Preferably, the buyer 300 has provided such funding with a party operating the central server, such as with the central server itself, before the buyer 300 identification step, and the settling of the price preferably takes place using the said deposited funds.

According to a preferred embodiment, the verification of the second, and preferably also the first, transaction comprises waiting until the blockchain that the first and second transactions form part of has been mined to a sufficient depth. For a bitcoin asset, this would mean that the verification process would have to wait until the mining depth of the first and second transactions on the ledger L was, for both of said transactions, at least 6 blocks deep. In an alternative embodiment, a minimum mining depth wait period is implemented in relation to the second transaction but not in relation to the first transaction. Hence, for a bitcoin settlement, the central server would typically need at least about one hour after the first and second transactions were performed before the settlement was deemed finalized and the price could be settled between the parties. It is noted that this finalization time is not the same as the predetermined time discussed above, before the central server deems the second transaction not to be performed.

In particular, the settlement method according to this second aspect of the present invention makes it possible to perform efficient settlement without either the seller 200 or the buyer 300 depositing the blockchain-based asset to be cleared with a party operating the central server at any time, such as with the central server itself. The cleared asset may hence always be held with the respective transaction parties 200, 300. This is also the preferred case.

Regarding the signing of the second transaction, it is necessary that the buyer 300 signs the second transaction. However, the publication to the ledger L may be performed by either the buyer 300 in question or the central server.

In one embodiment, the seller 200 may provide the central server with a valid signature of a redemption transaction back to the seller 200, which signature the central server may use for automatic redemption to the seller 200 of the blockchain-based asset in case an error is detected in the settlement process.

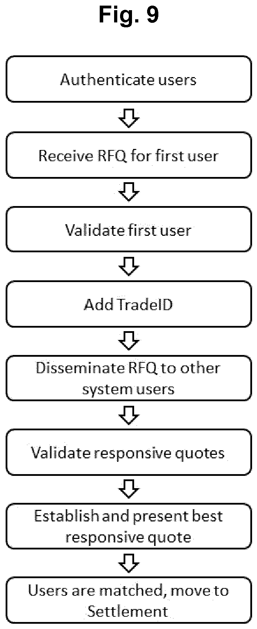

Figure 9 shows a flow chart for matching the seller 200 and the buyer 300 bilaterally.

In a first step, any user U accessing the system 100, and in particular the central server, so that they can submit orders, must be authenticated. An authenticated user U has undergone a due diligence (KYC/AML) review by the central server, and has the systems and controls in place to ensure the ability to partake in the matching and settlement process.

Then, the first user 200 submits an RFQ to the central server, expressing interest for buying or selling a specific size, in a specific blockchain-based asset, together with a blockchain public key. The RFQ acts as a non-binding solicitation of a non-binding quote and provides the basic terms required for other users U of the system 100 to form a responsive quote.

In a next step, the central server validates the RFQ, for instance by ensuring that the block-chain public key is controlled by the first user 200, such as using a method according to the first aspect of the invention described above, that the first user 200, in the case the first user 200 is delivering the price as a cash currency amount held on the above described position accounts, has a sufficient margin.

Thereafter, the central server produces a unique transaction identifier, represented by a string the length of which corresponds to (is equal to) the underlying blockchain's elliptic curve, and saves the details of the RFQ with the transaction identifier.

In a next step, the central server disseminates the RFQ information, including the transaction identifier and the said blockchain public key, to other users U of the system 100.

Said other users U then may provide responsive quotes in response to the RFQto the central server, which responsive quotes are validated by the central server. In particular, the central server validates a particular responsive quote in case it is either the first responsive quote to the RFQ in question or if it is an improvement over an already received responsive quote. Such responsive quotes comprise a respective blockchain public key. As an example, a responsive quote from the second user 300 will be assumed. In this case, the validation step comprises ensuring that the blockchain public key submitted with the responsive quote by the second user 300 is in fact controlled by the second user 300, and that, in the case the second user 300 is delivering the price as a cash currency amount held on the above described position accounts, has a sufficient margin. The details of the responsive quote are saved together with a transaction identifier history generated by the multiple responsive quotes.

Thereafter, the first user 200 is presented with the most competitive offer and the second user 300 is notified that it has the most competitive quote.

Then, the central server has now matched the two users 200, 300 bilaterally for a specific price, such as a cash amount which has been reserved in an accounting system stored in the database 103. The match is further for a specific size of a specified blockchain-based asset, with a defined and specified transaction identifier, and is also associated with a corresponding valid blockchain public key for both parties. The central server hence proceeds to generate the above-discussed multi-signature settlement public key by multiplying each of the users' 200, 300 respective blockchain public keys with the transaction identifier, in an Elliptic curve cryptography function, in order to generate two new blockchain public keys-the intermediate public keys described above. Once the central server has the two intermediate blockchain public keys, it then generates a multi-signature script from the intermediate public keys, which script designates the owner as a script hash, as opposed to as the owner of a particular public key.

A multi-signature script requires a total of M signatures from a total of N public keys, known as M-of-N multi-sig, where M is less than or equal to N. As noted above, in the present case, M is strictly less than N. In the case of the present settlement method, the script is in particular preferably constructed so that requirements at the point of creation state that 1-of-2 keys (i.e. both public keys) can control the multi-signature settlement public key. Moreover, it is possible to detect, from an outgoing transaction from the multi-signature settlement public key, which of the users' 200, 300 private keys that was applied to the multi-signature settlement public key, and as a result to determine which user 200 or 300 that executed a detected settlement pay-out transaction. Once the multi-signature settlement public key has been constructed, the central sever starts monitoring the multi-signature settlement public key for settlement execution. This monitoring preferably ignores RBF (Replace By Fee) enabled transactions.

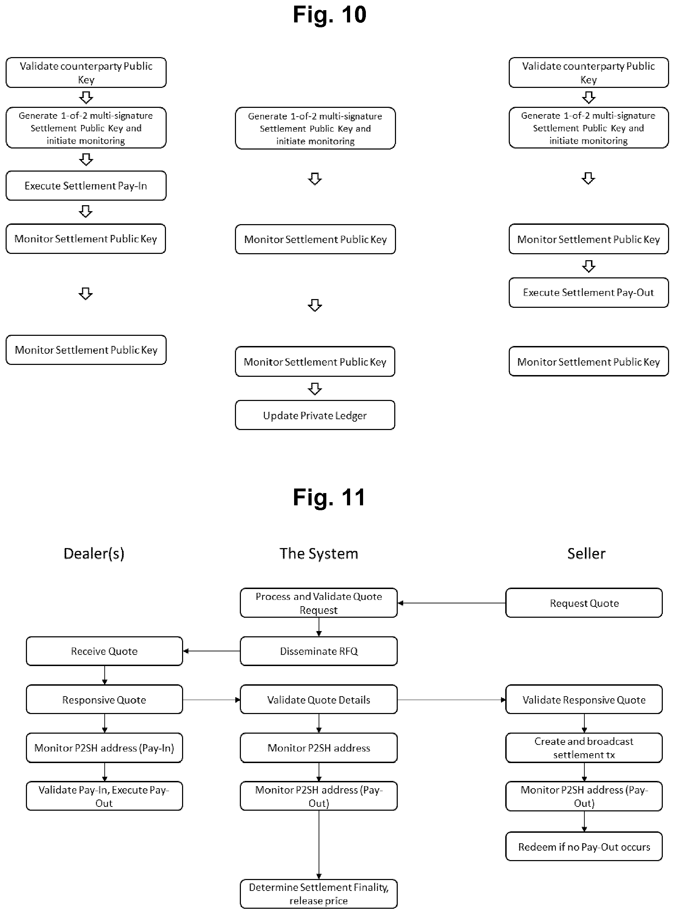

Figure 10 illustrates the settlement process in closer detail, including the blockchain settlement transaction flows. In Figure 10, a vertical time axis is used, so that steps are shown in order of performance from the top down.

In a first step, both of the users 200, 300 independently of each other and of the central server, and based on the details contained in the above described RFQ, validate the counterparty user's blockchain public key, preferably comprising a validation that the counterparty's public key has in fact been validated by the central server. This may, for instance, comprise a validation step of the corresponding user identity as created using a method according to the above-described first aspect of the present invention. Such validation may then comprise investigating that the authentication address and validation address each have a valid and expected blockchain ledger L transaction history; that the authentication address is properly funded (that the expected blockchain-based asset and asset size originates from the validation address and is still available for spending with the authentication address); that the validation address is properly funded (in the corresponding manner, including that the validation address is funded at least partly by the return transaction from the authentication address and that it is or has been reached by a transaction from an oracle key address); and that no other unauthorized transactions have occurred involving these addresses. In this context, "unauthorized transactions" are such that the user identity in question becomes invalid from the point of view of the operator of the system 100. Provided the validation is successful, the process continues, and if not, either party is able to abort the process.

Thereafter, both users 200, 300 and the central server generate a multi-signature settlement public key (settlement address), based upon the details of the RFQ, the two users' respective blockchain public keys, as well as the transaction identifier. As described above, the multi-signature settlement public key may be a unique 1-of-2 multi-signature public key based on the blockchain public keys provided by the users 200, 300, which public keys have been multiplied with elliptic curve cryptography to generate two new, intermediate, block-chain public keys, from which a 1-of-2 multi-signature script is subsequently created. Moreover, in this step each of the parties start (or continue) monitoring the blockchain for activity.

In a next step, the user (in this exemplifying case, the selling first user 200) with a block-chain-based asset delivery obligation executes a settlement pay-in transaction from an existing blockchain balance, preferably such a blockchain balance under his control, so that the balance that ends up, subtracting any potential network or transaction fees, on the multi-signature settlement public key is equal to the value agreed in the matched order.

All three parties (the selling first user 200, the buying second user 300 and the central server) monitor the blockchain, and in particular the multi-signature settlement public address, to determine when the pay-in transaction, for the agreed amount, has taken place.

This monitoring is performed by monitoring the blockchain ledger L for such pay-in transactions.

Once the pay-in transaction has been detected, the user U who has purchased the block-chain-based asset (in this case, the buying second user 300) is free to redeem the asset in question from the multi-signature settlement public key, by applying his private blockchain key the corresponding public key of which was used to construct the said multi-signature script hash, using a settlement pay-out transaction addressed to a blockchain address with which he would like the blockchain balance to be transferred. Preferably, this pay-out transaction must be conducted within a predetermined time period after the pay-in transaction, which time period is monitored by the central server and if not respected the transaction is reversed, such as by the central server using said a valid signature of a redemption transaction previously received from the selling user.

Both the central server and both users 200, 300 then monitor the settlement public key for such pay-out transaction. The monitoring again takes place by monitoring the blockchain ledger L. By monitoring the transaction signature of the pay-out transaction from the multi-signature settlement public key, the central server can know which of the two users 200, 300 made the transaction. In the case where the transaction was made by the user 200 who made the original pay-in transaction, the trade will be considered void (once settlement is final), and the reserved price balance offered as payment and recorded in the database 103 will be returned (or, in the preferred case in which the balance is only reserved by the central server during the transaction and settlement, unreserved). Should the pay-out transaction, on the other hand, be executed by the buying second user 300, the central server will monitor the blockchain ledger L for blockchain finality as described above, preferably by waiting until the pay-out transaction forms part of a block which is mined to a predetermined depth, such as a depth of at least 6 in the case of a settled bitcoin size.

Upon establishing such blockchain finality, the central server will then update the private cash currency ledger it maintains, and transfer the price, i.e. the private ledger balance, offered as payment for the blockchain-based asset.

Figure 11 illustrates a settlement method according to the present invention from the perspective of the selling user 200, acting in relation to a dealer user (the "dealer"), which may be the buying user 300 as described above.

In a first step, the seller 200 requests a quote from the central server. The quote request is received by, and processed by (comprising validation of the quote), the central server. Quote details, a quote identifier and a unique blockchain address of a responsive quote providing dealer are returned, after validation by the central server, to the seller 200.

Then, the seller 200 validates the responsive quote. This may comprise verifying the dealer address, in particular investigating the history of the address based upon the created user identifier of the dealer, in other words ECDH(dealer address, dealer identifier). In particular, the seller 200 verifies that the dealer authentication address was funded by a valid central server root validation address, and that these funds still exist with the authentication address and that the validation address is still funded by the return transaction.

If the verification turns out in the positive, the seller 200 creates and broadcasts a transaction (for the defined amount) to a 1-of-2 multi-signature P2SH settlement address comprised of the addresses ECDH(dealer address, quote identifier) and ECDH(seller address, quote identifier). The settlement address is funded with the blockchain-based asset, such as a bitcoin amount, to be sold. Also, a return transaction is signed, spending 1-of-2 with the return address public key of a return address of choice. The 1-of-2 script is referred to by its P2SH address. The dealer will be provided enough data to recreate P2SH script from scratch, since all required information is deterministically available.

The central server monitors the 1-of-2 P2SH address, preferably ignoring any RBF enabled transactions. After the quote expires, the monitoring stops.

In connection to the quote request message flows (above), the quote details, quote identifier and the client unique blockchain address were pushed to the dealer from the central server.

After the responsive quote has been submitted, the dealer monitors the blockchain, and identifies the P2SH 1-of-2 transaction on the ledger L. The dealer furthermore verifies the asset size and the quote TTL (Time To Live). The TTL is preferably at least 10 seconds, preferably at least 30 seconds, while preferably being at the most 10 minutes, preferably at the most 1 minute. If these verifications turn out in the positive, the dealer creates and broadcasts a spend transaction, redeeming 1-of-2 using the ECDH(dealer address, quote identifier) private key, moving the asset to an address of choice. If the verifications fail, the dealer does nothing, letting the quote expire. Redeeming the asset by the buying user is considered accepting the quote.

ECDH addresses offer privacy and security. They allow to create a unique address per parties per transaction, since the quote identifier is unique. They also prove the transaction is related to the quote identifier-there is no need, and not preferred, to attach any transaction explaining meta data in the settlement transaction itself. They also obfuscate addresses- it is not possible to audit the ECDH transaction without knowing the quote identifier and the unique addresses of the dealer and seller 200. It is not possible to identify neither the dealer nor the seller 200 without knowing the specific quote identifier for each transaction, even knowing the unique address and identifier of the dealer and/or the user 300. The parties to the trade also retain privacy even if they have traded with each other, while full auditability is maintained by a party knowing all the quote components.

The central server will monitor the ledger L for the mined redeeming transaction. If the redeeming transaction was spent using the dealer's private key, the price is released to the seller 200, such as by effecting the corresponding internal transaction in the database 103.

The seller 200 monitors the ledger L for the redeem transaction. If it has not been broadcast when the quote expires, the previously signed return transaction is broadcast.

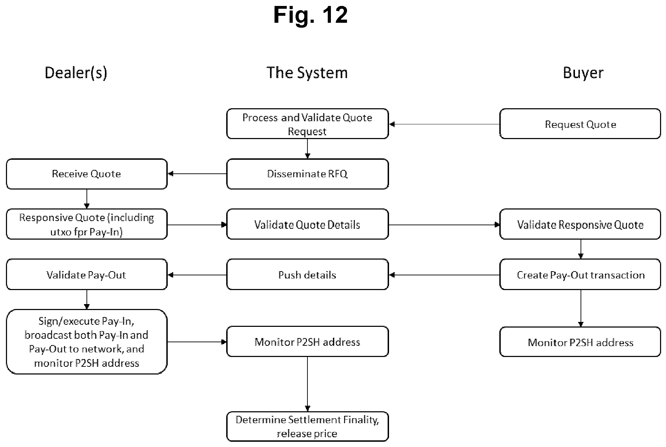

Figure 12 illustrates a settlement method according to the present invention from the perspective of the buying user 300, acting in relation to a dealer user (the "dealer"), which may be the selling user 200 as described above.

In a first step, the buyer 300 requests a quote from the central server.

The central server checks the available line of credit, in terms of the price, for the buyer 300 with the central server, and processes the quote request, including a validation of the quote request. Such validation may comprise a validation of the user identity of the requester as described herein. In case verifications turn out in the positive, the central server pushes the quote details, comprising the quote identifier and the unique address of the buyer 300, to the dealer.

The dealer verifies the unique address of the buyer 300, and constructs a 1-of-2 script. At this time, the dealer preferably neither signs nor broadcasts the transaction.

Then, the dealer returns the transaction identifier of the unsigned transaction, as well as txout index (the actual unspent asset amount which will be used to fund the 1-of-2 script hash transaction), to the central server.

The central server, in turn, validates and pushes the quote details, comprising the quote identifier and the unique address and identifier of the dealer, as well as the transaction identifier and txout index, to the buyer 300.

Then, the buyer 300 validates the quote, and constructs the 1-of-2 script. As is the case in the method illustrated in Figure 11, this transaction is built in a deterministic manner, so the buyer 300 can recreate the exact same script as the dealer. The buyer 300 also creates a redeeming transaction, that signs the 1-of-2 script with the buyer's 300 private key, referencing the transaction identifier and txout index provided by the central server and moving the expected blockchain-based asset size.

The buyer 300 signs the redeeming transaction and pushes it to the central server.

The central server, in turn, pushes the signed redeeming transaction to the dealer.

The dealer verifies the redeeming transaction, and checks that it spends the proper transaction identifier and txout index. The dealer verifies the quote TTL; signs the pay-in transaction of the previously selected utxo; and broadcasts both the settlement pay-in transaction as well as the settlement pay-out transaction.

Finally, the central server monitors the ledger L for confirmation of the redeeming transaction. It then releases the price to the dealer, by an internal transaction affecting the corresponding accounts in the database 103, once a confirmation has been received at a mining depth of 6 levels. If such confirmation is not received, nothing is done. If the redeeming transaction was not constructed properly, the blockchain-based asset will not leave the settlement transaction, and the dealer can recover the asset at its own discretion.

Above, preferred embodiments have been described. However, it is apparent to the skilled person that many modifications can be made to the disclosed embodiments without departing from the basic idea of the invention.

For instance, any revocation transaction, for whatever reason, can be constructed and presigned prior to the execution of the pay-in (provided the pay-in UTXO is known), and also after the seller notices that no pay-out occurs. In the preferred case in which the revocation transaction is presigned, it can be both the seller and the central server which publishes it.

All method steps described above are preferably performed automatically by corresponding computer devices, such as users' computers or the central server. Hence, even if not explicitly stated, all of the said method steps are performed using software executed by or from such computer devices. This means, for instance, that a software allowing a user U to place RFQ:s or responsive quotes as described above, may be allowed to do so via a user interface provided on a screen of the computer of the user in question, by specifying a particular blockchain-based asset, size, price and so on. However, such RFQ:s or responsive quotes could also be automatically sent to the central server as a result of an automatic determination by the software, such as within the bounds of an automatic, hardware and/or software-implemented, algorithmic trading setup. Specifically, since the settled assets are blockchain-based, it is not possible to perform the present method manually, but it requires the use of software-driven computer devices. In general, communications between the central server and various users U are digital and electronic, and also encrypted as required.

In general, the first and second aspects described above are fully compatible with each other, and can be used in combination whenever individual users need to be securely identified and whenever a blockchain-based asset transaction needs to be cleared. Preferably but not necessarily, the same blockchain-based asset type (such as bitcoin) is used in both the first and second aspects when they are used in combination.

It is realized that the central server may have other functionality, for trading, settlement, clearing, etc., in addition to the above described functionality. Also, the system 100 may comprise additional components and functionality.

Herein, the terms "blockchain address" and "public key" are sometimes used in an interchanging manner, sometimes with distinct meanings. In general, a "blockchain address" may be or be unambiguously derivable from a "public key", as described above. Therefore, the technical significance of a "blockchain address" and a "public key" mayforvarious block-chain ledgers L be identical, or at the very least completely corresponding, for the present purposes. As a result, whenever the word "blockchain address" is used herein, "public key" may be used instead, and vice versa.

Throughout the processes described herein, it is possible and preferred that the users U stay anonymous in relation to each other in terms of their actual physical identities (such as name and address), and are only identified using their respective public keys and corresponding associated created client identities as described above.

The present invention relates to a method, but also to a system arranged to perform such a method. In general, all which is said herein regarding the method is equally applicable to the system, and vice versa.

Hence, the invention is not limited to the described embodiments, but can be varied within the scope of the enclosed claims.

## Claims

1. Method for settling a transaction concerning an asset and being registered by forming part of a blockchain-based ledger (L) for said asset, which ledger (L) is arranged to keep track of transactions concerning the asset in question from senders to specified asset addresses (A), which transactions are signed using a private cryptographic key belonging to the sender in question, **characterised in that** the method comprises the steps
a) a central server identifying a seller (200), being associated with a seller address, and a buyer (300), being associated with a buyer address, of the said asset, at a specified price, and the central server producing a transaction identifier;
b) calculating, based upon the seller address or corresponding public key, the buyer address or corresponding public key, and the transaction identifier, a M-of-N multi-signature address capable of being activated by a respective private key of both the seller (200) and the buyer (300), which respective private key corresponds to said respective public key, wherein M<N;
c) the seller (200) signing a first transaction of the asset to the multi-signature address;
d) the buyer (300) signing a second transaction of the asset from the multi-signature address to the buyer address;
e) the central server verifying the first and second transactions; and
f) the central server settling the said price between the buyer and seller.

2. Method according to claim 1, **characterised in that** the multi-signature address is a 1-of-2 multi-signature transaction hash script address.

3. Method according to claim 1 or 2, **characterised in that** step a) comprises the buyer (300) and the seller (200) providing to the central server, as a part of a specified respective quote or offer for the asset in question, the said respective seller and buyer addresses or corresponding public keys.

4. Method according to claim 3, **characterised in that** the said quote or offer is non-binding to the buyer (300) and/or seller (200) in question who places the quote or offer.

5. Method according to any one the preceding claims, **characterised in that** step a) comprises a request for quote process, in which an offering buyer (300) or seller (200) provides, to the central server, an offer for the asset, whereupon the central server disseminates the offer, together with the offering party's address or corresponding public key and the said transaction identifier, for quote giving by counterparties.

6. Method according to any one the preceding claims, **characterised in that** the method further comprises the initial steps of
a) providing, to or by the central server, at least one validation asset address or corresponding public key associated with a private validation key controlled by the central server, at least one of said one or more validation asset addresses or corresponding public keys being funded with a certain validation amount of said asset;
b) providing, to or by at least one of the seller (200) and buyer (300), a user authentication asset address or corresponding public key associated with a private authentication key held by the user in question;
c) providing a first transaction transferring a certain authentication amount of said asset from the validation asset address or corresponding public key to the authentication asset address or corresponding public key, which first transaction is signed using the private validation key;
d) providing a second transaction transferring a first share of the authentication amount, a validation amount, from the authentication asset address or corresponding public key to one of the said validation asset addresses or corresponding public keys, and a second share of the authentication amount back to the authentication asset address or corresponding public key, which second transaction is signed using the private authentication key; and
e) determining the said user identity such that the authentication asset address or corresponding public key is, or is unambiguously associated with, the user identity,
and **in that** step a) further comprises the central server verifying at least one of the seller address and the buyer address by verifying the validation address and the authentication address.

7. Method according to any one the preceding claims, **characterised in that** the multi-signature address is calculated by the central server.

8. Method according to claim 7, **characterised in that** the multi-signature address is independently calculated by both the seller (200), the buyer (300) and the central server.

9. Method according to any one the preceding claims, **characterised in that** the multi-signature address comprises a multi-signature hash script which is unique.

10. Method according to any one the preceding claims, **characterised in that** the multi-signature address is calculated based upon two intermediate public keys, each of which has been calculated, using an elliptic curve function, based upon the buyer address, or corresponding public key, and the seller address, or corresponding public key, as well as the transaction identifier.

11. Method according to any one the preceding claims, **characterised in that** step d) takes place using a signature by the buyer (300) using the said private key of the buyer (300).

12. Method according to any one the preceding claims, **characterised in that**, after step c) but before step d), the seller (200) may redeem the asset by signing, using the said private key of the seller (200), a redemption transaction of the asset from the multi-signature address, or corresponding public key, whereupon the method is aborted.

13. Method according to any one the preceding claims, **characterised in that** the verification in step e) comprises waiting until the blockchain that the first and second transactions form part of has been mined to a sufficient depth.

14. System (100) for settling a transaction concerning an asset and being registered by forming part of a blockchain-based ledger (L) for said asset, which ledger (L) is arranged to keep track of transactions concerning the asset in question from senders to specified asset addresses (A), which transactions are signed using a private cryptographic key belonging to the sender in question, **characterised in that** the system (100) comprises a central server, arranged to identify a seller (200), being associated with a seller address and a buyer (300), being associated with a buyer address, of the said asset, at a specified price; to produce a transaction identifier; to calculate, based upon the seller address or corresponding public key, the buyer address or corresponding public key, and the transaction identifier, a M-of-N multi-signature address capable of being activated by a respective private key of both the seller (200) and the buyer (300), which respective private key corresponds to said respective public key, wherein M<N; to monitor and verify, on the ledger (L), a first transaction of the asset to the multi-signature address; to monitor and verify, on the ledger (L), a second transaction of the asset from the multi-signature address to the buyer address; to verify the first and second transactions; and to settle the said price between the buyer (300) and seller (300).

15. Computer product for automatically partaking as a trading party in a transaction concerning an asset and being registered by forming part of a blockchain-based ledger (L) for said asset, which ledger (L) is arranged to keep track of transactions concerning the asset in question from senders to specified asset addresses (A), which transactions are signed using a private cryptographic key belonging to the sender in question, **characterised in that** the computer product is arranged to, electronically, to a central server signal interest on behalf of an interested user (200;300) to trade the said asset, at a particular price, identifying to the central server the user (200;300) by a blockchain address or corresponding public key; to receive, from the central server, both a blockchain address or a corresponding public key identifying a counterpart user (300;200) and a transaction identifier; to calculate, based upon both the said addresses or corresponding public keys and the said transaction identifier, a M-of-N multi-signature address capable of being activated by a respective private key of both the interested (200;300) and the counterpart (300;200) user, which respective private key corresponds to said respective public key, wherein M<N; in case the trade relates to a selling of the asset, to sign a first transaction of the asset to the multi-signature address; and, in case the trade instead relates to a buying of the asset, to sign a second transaction of the asset from the multi-signature address to the buyer address.
